# EUROPÄISCHE PATENTANMELDUNG

(11) **EP 0 889 484 A2**
(43) Veröffentlichungstag der Anmeldung: **07.01.1999**
(21) Anmeldenummer: 98810572.2
(22) Anmeldetag: 23.06.1998
(51) Int. Cl.: H01B 3/40, C08K 3/00, C08L 63/00

(54) **Verfahren zur Imprägnierung von elektrischen Spulen und ausgewählte Epoxidharzzusammensetzung zur Durchführung der Imprägnierung**

(30) Priorität: 02.07.1997 CH 1605/97
(71) Anmelder: Ciba Specialty Chemicals Holding Inc., 4057 Basel (CH)
(72) Erfinder: Behm, Dean Tallak, Lincoln University, PA 19352 (US); Weidmann, Ulrich, 4055 Basel (CH); Willis, Philip David, 4310 Rheinfelden (CH); Bleuel, Felix, 4052 Basel (CH); Buchmann, Hans-Fred, 79650 Schopfheim (DE); Glauch, Dieter, 79418 Schliengen (DE)

(57) **Zusammenfassung**

Ein Verfahren zur Imprägnierung einer elektrischen Spule, die eine Wicklung aus mehreren Lagen bestehend aus mehr als einer Windung eines elektrisch leitenden drahtförmigen Materials umfasst, mit einem Kunststoffmaterial, das die einzelen Windungen des drahtförmigen Materials elektrisch voneinander isoliert, mit Hilfe einer thermisch härtbaren Epoxidharzzusammensetzung, dadurch gekennzeichnet, dass diese Zusammensetzung bei Raumtemperatur fest ist und die nachfolgend genannten Bestandteile enthält:
(a) ein bei Raumtemperatur festes Epoxidharz, ausgewählt aus
   (a1) Polyglycidylethern auf Basis von Novolaken;
   (a2) Diglycidylethern auf Basis von Bisphenolen und
   (a3) Gemischen von mehr als einer der Komponenten (a1) und (a2);
(b) ein Vernetzungsmittel für die Komponente (a);
(c) einen geeigneten Beschleuniger für die Reaktion der Komponente (a) und der Komponente (b);
(d) 15 bis 70 Gewichtsprozent, bezogen auf das Gesamtgewicht der Zusammensetzung, Füllstoff, ausgewählt aus
   (d1) Calciumcarbonat,
   (d2) Quarzmehl,
   (d3) Wollastonit, dessen Teilchen ein mittleres Verhältnis von Länge zu Querschnitt aufweisen, das kleiner als 5:1 ist;
   (d4) Gemischen der Komponenten (d1), (d2) und (d3) sowie
   (d5) Gemischen der Komponenten (d1), (d2), (d3) und (d4) mit anderen anorganischen Füllstoffen; und die bevorzugt weiterhin
(e) 10 bis 60 Gewichtsprozent, bezogen auf das Gesamtgewicht der Zusammensetzung, anorganische Verstärkungsmittel in Form von nadel- oder faserförmigen Teilchen mit einer Länge von 0,05 bis 2,5 mm,
   die ein mittleres Verhältnis von Länge zu Querschnitt von 5 :1 und mehr aufweisen, enthält,
wobei die Gesamtmenge der Komponente (d) und (e) maximal 80 Gewichtsprozent, bezogen auf das Gesamtgewicht der Zusammensetzung, beträgt, macht unter anderem den Einsatz von verlorenen Formen unnötig und verringert die für die Fertigstellung der Spulenumhüllung erforderliche Aushärtungszeit um ein Vielfaches in den Bereich von wenigen Minuten.

## Beschreibung

Die vorliegende Erfindung betrifft ein Verfahren zur Imprägnierung einer elektrischen Spule, die eine Wicklung aus mehreren Lagen umfasst, von denen jede aus mehr als einer Windung eines elektrisch leitenden drahfförmigen Materials besteht, mit einem Kunststoffmaterial, das die einzelen Windungen des drahfförmigen Materials elektrisch voneinander isoliert, bei dem die einzelnen Windungen der Spule mit Hilfe einer härtbaren Epoxidharzzusammensetzung umhüllt werden und diese Zusammensetzung thermisch gehärtet wird, sowie besonders bevorzugte härtbare Zusammensetzungen zur Durchführung der Imprägnierung.

Aus der WO-A-96/01481 ist bekannt, härtbare Epoxidharzzusammensetzungen, die bei Raumtemperatur flüssig sind und die (a) einen flüssigen Bisphenol-A-diglycidylether, (b) ein Vernetzungsmittel hierfür, (c) einen geeigneten Beschleuniger für die Reaktion des flüssigen Diglycidylethers (a) mit dem Vernetzungsmittel (b) sowie (d) ein Füllstoffmaterial enthalten, das, bezogen die Komponente (a) und (b), 40 bis 60 Gewichtsprozent Calcit und nadelförmigen, künstlichen Wollastonit umfasst, zur Imprägnierung und gegebenfalls zur Umhüllung von elektrischen Spulen zu verwenden, die Wicklungen aus vielen Lagen umfassen, von denen jede aus einer grossen Zahl von Windungen aus einem dünnen drahfförmigen Leitermaterial besteht, wie z. B. die Sekundärwicklungen von Transformatoren oder Zündspulen. Der Einsatz von flüssigen Epoxidharzsystemen, wie den genannten, ermöglicht zwar die ausreichende Imprägnierung derartiger Wicklungen, d. h. das Eindringen des Epoxidmaterials zwischen alle Windungen einer Wicklung, hat aber noch einige Nachteile. So können die flüssigen Epoxidharzsysteme nur in Zweikomponentenform konfektioniert werden, was den Verarbeitungsaufwand beim Anwender nicht unerheblich vergrössert. Weiterhin erfordern die genannten flüssigen lmprägnierungssysteme die Verwendung einer verlorenen Form mit der für die fertige Spule gewünschten äusseren Kontur. In diese Form muss die zu umhüllende Spule eingebracht werden. Dann muss die Form, im allgemeinen nach Evakuierung, mit der flüssigen härtbaren Epoxidharzzusammensetzung gefüllt werden und die Zusammensetzung in der Form ausgehärtet werden. Nach der Härtung kann die Form aber nicht mehr enffernt werden, und muss daher als "verlorene Form" für immer um die Spule herum verbleiben. Ein weiterer ganz wesentlicher Nachteil der oben genannten flüssigen Epoxidharzzusammensetzungen ist zudem ihre äusserst lange Härtungsdauer, die im allgemeinen mehrere Stunden beträgt und die bei Massenproduktion von Spulen die Verwendung riesiger Härtungsöfen erforderlich macht.

Aufgabe der vorliegenden Erfindung ist es, unter anderem die oben genannten Nachteile bei der Imprägnierung von Spulen, insbesondere von Zündspulen, Printtransformatoren und Flybacktransformatoren, zu vermeiden.

Es wurde nun gefunden, dass zur Imprägnierung derartiger Spulen auch bei Raumtemperatur, d.h. bei einer Temperatur von ca. 15 bis 25°C feste, in spezifischer nachfolgend definierter Weise zusammengesetzte, vorzugsweise faserverstärkte, härtbare Epoxidharzzusammensetzungen verwendet werden können. Besonders überraschend ist hierbei, dass derartige Zusammensetzungen auch die Sekundärwicklungen üblicher Zündspulen und Transformatoren in ausreichender Weise durchdringen können, selbst wenn sie relativ grosse Mengen eines Verstärkungsmaterials enthalten, das aus anorganischen Fasern einer Länge von bis zu etwa 2,5 mm besteht. Die Verwendung dieser festen Epoxidharzzusammensetzungen macht den Einsatz der verlorenen Formen unnötig und verringert die zur Fertigstellung der Spulenumhüllung erforderliche Aushärtungszeit um ein Vielfaches in den Bereich von wenigen Minuten, im allgemeinen von maximal 15 Minuten.

Gegenstand der vorliegenden Erfindung im weitesten Sinne ist somit ein Verfahren zur Imprägnierung einer elektrischen Spule, die eine Wicklung aus mehreren Lagen bestehend aus mehr als einer Windung eines elektrisch leitenden drahfförmigen Materials umfasst, mit einem Kunststoffmaterial, das die einzelen Windungen des drahfförmigen Materials elektrisch voneinander isoliert, mit Hilfe einer thermisch härtbaren Epoxidharzzusammensetzung, dadurch gekennzeichnet, dass diese Zusammensetzung bei Raumtemperatur fest ist und die nachfolgend genannten Bestandteile enthält:
(a) ein bei Raumtemperatur festes Epoxidharz, ausgewählt aus
   (a1) Polyglycidylethern auf Basis von Novolaken;
   (a2) Diglycidylethern auf Basis von Bisphenolen und
   (a3) Gemischen von mehr als einer der Komponenten (a1) und (a2);
(b) ein Vernetzungsmittel für die Komponente (a);
(c) einen geeigneten Beschleuniger für die Reaktion der Komponente (a) und der Komponente (b);
(d) 15 bis 70 Gewichtsprozent, bezogen auf das Gesamtgewicht der Zusammensetzung, Füllstoff, ausgewählt aus
   (d1) Calciumcarbonat,
   (d2) Quarzmehl,
   (d3) Wollastonit, dessen Teilchen ein mittleres Verhältnis von Länge zu Querschnitt aufweisen, das kleiner als 5:1 ist;
   (d4) Gemischen der Komponenten (d1), (d2) und (d3) sowie
   (d5) Gemischen der Komponenten (d1), (d2), (d3) und (d4) mit anderen anorganischen Füllstoffen.

Unter "lmprägnierung" wird in dieser Anmeldung eine Behandlung der elektrischen Spule verstanden, bei der die einzelnen Windungen zumindest einer Spulenwicklung mit Hilfe der härtbaren Epoxidharzzusammensetzung umhüllt werden und die Zusammensetzung thermisch gehärtet wird. Diese Behandlung kann jedoch die gesamte Umhüllung von Teilen der Spule oder auch der gesamten Spule, inclusive des Spulenkörpers, mit der härtbaren Epoxidharzzusammensetzung umfassen.

Bevorzugt enthält die Zusammensetzung, die bei dem erfindungsgemässen Verfahren eingesetzt wird, weiterhin:
(e) 10 bis 60 Gewichtsprozent, bezogen auf das Gesamtgewicht der Zusammensetzung, anorganische Verstärkungsmittel in Form von nadel- oder faserförmigen Teilchen mit einer Länge von 0,05 bis 2,5 mm, die ein mittleres Verhältnis von Länge zu Querschnitt von 5 :1 und mehr aufweisen,
wobei die Gesamtmenge der Komponente (d) und (e)maximal 80 Gewichtsprozent, bezogen auf das Gesamtgewicht der Zusammen setzung, beträgt.

Vorzugsweise kommen speziell ausgewählte Zusammensetzungen zum Einsatz, bei denen das Verstärkungsmittel (e) aus nadel- oder faserförmigen Teilchen mit einer Länge von 0,15 bis 2,5 mm besteht. Diese Zusammensetzungen bilden einen weiteren Gegenstand der vorliegenden Erfindung.

Besonders bevorzugt handelt es sich bei dem Verstärkungsmittel (e) um ein Glasfasermaterial, insbesondere um gemahlene oder geschnittenen Glasfasern mit einer Länge von 0,05 bis 2,5 mm und einem Durchmessers von vorzugsweise 10 bis 30 µm, die in verschiedener Form auch kommerziell erhältlich sind. Besonders gut bewährt hat sich beispielsweise Verstärkungsmaterial aus Glasfasern einer Länge von 0,05 mm, insbesondere von 0,15 mm, bis 2 mm, insbesondere bis 1 mm, beispielsweise von etwa 0,2 bis 0,25 mm.

Bei den Polyglycidylethern auf Basis von Novolaken, die bei dem erfindungsgemässen Verfahren und in den erfindungsgemässen Zusammensetzungen als Komponente (a1) zum Einsatz kommen, handelt es sich insbesondere um:
(a1.1) Polyglycidylether auf Basis von Epoxyphenolnovolaken,
(a1.2) Polyglycidylether auf Basis von Epoxycresolnovolaken oder um
(a1.3) Gemische von Epoxynovolaken des Typs (a1.1) und/oder (a1.2).

Bei der Komponente (a2) handelt es sich vorzugsweise um Diglycidylether auf Basis von Bisphenol A. Dies können beispielsweise auch vorverlängerte (avancierte) Harze sein, die durch Umsetzung von Bisphenol-A-diglycidylether mit einem stöchiometrischen Unterschuss von Substanzen erhältlich sind, die zwei mit Epoxidgruppen reaktive funktionelle Gruppen aufweisen, insbesondere durch Umsetzung von 1,1 bis 2 Molen Bisphenol-A-diglycidylether mit einem Mol Bisphenol A.

Das Vernetzungsmittel (b) ist zweckmässig ausgewählt aus:
(b1) Dicyandiamid,
(b2) Polycarbonsäureanhydriden und
(b3) Gemischen aus mehr als einer der Komponenten (b1) und/oder (b2) und/oder einem oder mehreren Polyphenolen.

Wird ein organisches Carbonsäureanhydrid als Vernetzungsmittel eingesetzt, handelt es sich bevorzugt um ein aromatisches oder um ein cycloaliphatisches Polycarbonsäureanhydrid, insbesondere um ein entsprechendes Dicarbonsäureanhydrid, wie z. B. um Phthalsäureanhydrid, Hexahydrophthalsäureanhydrid oder Methyltetrahydrophthalsäureanhydrid. Bevorzugt sind besonders bei Raumtemperatur feste Carbonsäureanhydride.

Enthält das Vernetzungsmittel einen gewissen Anteil Polyphenole, so kann dies vorteilhaft in Bezug auf die Verarbeitung der lmprägniermassen sein. Da die Anwesenheit von grösseren Mengen Polyphenolen jedoch das Eindringen der härtbaren Zusammensetzung in die Wicklung erschweren und somit die Imprägniertiefe verringern kann, richtet sich die Obergrenze für den Anteil Polyphenol im Vernetzungsmittel nach der erforderlichen lmprägniertiefe.

Als Polyphenole werden bevorzugt:
Phenolnovolake,
Cresolnovolake und/oder
Gemische von Novolaken der genannten Typen.

Das Vernetzungsmittel (b) wird in den üblicherweise verwendeten Mengen eingesetzt, z. B. in Mengen bis zu 50 Gewichtsprozent, bevorzugt bis zu 25 Gewichtsprozent, bezogen auf das Epoxidharz. Dicyandiamid wird besonders bevorzugt in einer Menge von 0,16 bis 0,5 Mol pro Epoxidäquivalent der Zusammensetzung verwendet, insbesondere gibt man es in solchen Mengen zu, dass in den erfindungsgemässen Zusammensetzungen 0,25 bis 0,35 Mol Dicyandiamid pro Epoxidequivalent vorhanden sind.

Wird Dicyandiamid als Vernetzungsmittel eingesetzt, weisen die erfindungsgemässen Epoxidharzzusammensetzungen eine besonders gute Latenz auf, so dass sie beispielsweise ohne Probleme bei Raumtemperatur (ca. 15 bis 25°C) gelagert werden können.

Als Beschleuniger (d) können alle dem Fachmann bekannten für die Beschleunigung der Reaktion von Epoxidharzen mit Dicyandiamid oder mit Polyphenolen, beziehungsweise mit organischen Anhydriden üblichen Substanzen eingesetzt werden. Beispiele für Beschleuniger für die Reaktion mit Dicyandiamid sind Alkalimetallalkoholate, tertiäre Amine, insbesondere Hexamethylentetramin, Phosphine, wie Triphenylphosphin, quartäre Ammoniumverbindungen, substituierte Harnstoffe, wie N-(4-Chlorphenyl)-N,N'-dimethylharnstoff oder N-(3-Chlor-4-methylphenyl)-N,N'-dimethylharnstoff, Mannichbasen, wie 2,4,6-Tris-(dimethylaminomethyl)phenol oder 2,4,6-Tris-(diethylaminomethyl)phenol, lmidazol oder Imidazolderivate, wie 2-Phenylimidazol, 2-Ethylimidazol, 2-Methylimidazol oder Benzimidazol, sowie BCl₃- und BF₃-Komplexe mit tertiären Aminen, wie Trimethylamin, Octyldimethylamin, Triethylamin, Piperidin, Pyridin oder Hexamethylentetramin. Bevorzugt sind Imidazole, insbesondere 2-Ethylimidazol. Beispiele für Beschleuniger für die Reaktion mit Polyphenolen sind tertiäre Amine, wie Benzyldimethylamin, Imidazole, wie Imidazol, 2-Phenylimidazol, 2-Ethylimidazol, 2-Methylimidazol oder Benzimidazol, oder quartäre Ammoniumverbindungen. Beispiele für Beschleuniger für die Reaktion mit Carbonsäureanhydriden sind tertiäre Amine und deren Salze, wie N-Benzyldimethylamin oder Triethanolamin, Mannichbasen, wie die oben schon genannten, Imidazol und Imidazolderivate, quartäre Ammoniumsalze, z. B. Benzyltrimethylammoniumchlorid, Phosphoniumsalze, wie Tetraphenylphosphoniumbromid, und Alkalimetallalkoxide. Die Menge Beschleuniger beträgt vorzugsweise 1 bis 30 Gewichtsteile, bezogen auf 100 Gewichtsteile Katalysator, besonders bevorzugt 3 bis 20 Gewichtsteile, insbesondere 5 bis 12 Gewichtsteile.

Die Teilchengrössenverteilung des Füllstoffs, der die Komponente (d) der beschriebenen Zusammensetzungen bildet, beträgt vorzugsweise 0,1 bis 200 µm, insbesondere 0,2 bis 60 µm. Bei dem als Füllstoff eingesetzten Calciumcarbonat handelt es sich bevorzugt um feinteiliges und im wesentlichen wasserfreies Calciumcarbonat. Beispiele für andere anorganische Füllstoffe als Calciumcarbonat, Quarzmehl und Wollastonit sind Kaolin, Dolomit, Bariumsulfat, Talk, Glimmer, Aluminiumoxid oder Aluminiumoxidtrihydrat. Werden Gemische von Calciumcarbonat, Quarzmehl und/oder Wollastonit mit anderen Füllstoffen verwendet, so enthalten die Zusammensetzungen bevorzugt mindestens 20, insbesondere mindestens 30 Gewichtsprozent Calciumcarbonat, Quarzmehl und/oder Wollastonit. Die anderen Füllstoffe können z. B. in einer Menge von bis zu 40, vorzugsweise in einer Menge bis zu 30 Gewichtsprozent vorliegen. Besonders bevorzugt ist in den erfindungsgemäss eingesetzten Zusammensetzungen Wollastonit als einziger Füllstoff enthalten.

In manchen Fällen erweist es sich zudem als günstig, wenn die Zusammensetzungen, die erfindundungsgemäss eingesetzt werden, einen Zähigkeitsvermittler als eine weitere Komponente (f) enthalten. Der Zähigkeitsvermittler wird hierbei vorzugsweise in Mengen von 0,5 bis 5, vorzugsweise im Bereich von etwa ein bis zwei Gewichtsprozent, bezogen auf die Gesamtzusammensetzung eingesetzt.

Der Zähigkeitsvermittler (f) ist vorzugsweise ausgewählt aus:
(f1) mit Polysiloxanen modifizierten Epoxidharzen und
(f2) Blockcopolymeren auf Basis von Polydimethylsiloxanen und Caprolacton oder Polycaprolactonen.

Derartige Zähigkeitsvermittler sind dem Fachmann bekannt und in verschiedener Form auch kommerziell erhältlich.

Wird ein Zähigkeitsvermittler des Typs (f1) eingesetzt, handelt es sich insbesondere um einen mit Polysiloxanen modifizierten Diglycidylether auf Basis von Bisphenol A.

Die zur Imprägnierung elektrischer Spulen erfindungsgemäss benutzten Zusammensetzungen können ferner ein Formtrennmittel als eine weitere Komponente (g) enthalten, wie z. B. Hoechst OP-Wachs® (teilverseiftes Montanwachs), Hoechst-Wachs KSL ® (Montanwachs), Carnaubawachs, Calciumstearat oder ähnliche Formtrennmittel oder Gemischen einer oder mehrerer der genannten Substanzen.

Weiterhin können die erfindungsgemäss eingesetzten härtbaren Zusammensetzungen noch weitere übliche Additive enthalten, z. B. Haftvermittler für die Füllstoffe und die Verstärkungsmaterialien, wie insbesondere Silanhaftvermittler, Pigmente, wie Russ, oder Flexibilisatoren.

Bei einer speziellen Ausführungsform des erfindungsgemässen Verfahrens wird eine härtbare Zusammensetzung eingesetzt, die als Komponenten (a), (b) und (c) die nachfolgend genannten Bestandteile enthält:
(a2) einen oder mehrere Diglycidylether auf Basis von Bisphenolen;
(b2) eines oder mehrere Polycarbonsäureanhydride;
(c) einen geeigneten Beschleuniger für die Reaktion der Komponente (a2) und der Komponente (b2).

Bei einer besonders bevorzugten Ausführungsform des erfindungsgemässen Verfahrens enthält die zur Umhüllung der Spulen verwendete Zusammensetzung als Komponenten (a), (b) und (c) die nachfolgend genannten Bestandteile:
(a) ein bei Raumtemperatur festes Epoxidharz, ausgewählt aus
   (a1) einen oder mehrere Polyglycidylether auf Basis von Novolaken;
   (a2) Diglycidylethern auf Basis von Bisphenolen und insbesondere
   (a3) Gemischen von mehr als einer der Komponenten (a1) und (a2);
(b) ein Vernetzungsmittel ausgewählt aus
   (b1) Dicyandiamid und
   (b4) Gemischen von Dicyandiamid und Polyphenolen (b2); und
(c) einen geeigneten Beschleuniger für die Reaktion der Komponente (a) und der gewählten Komponente (b1) oder (b4), z. B. Hexamethylentetramin.

Bei der letztgenannten Ausführungsform des Verfahrens werden lmprägnierungssmassen mit einem besonders hohen Tg-Wert, im allgemeinen über 150°C (bestimmt mit Torsionsschwingversuch nach ISO 6721, Heizrate 2°C/min) erreicht.

Bei bevorzugten speziellen Varianten der letztgenannten Ausführungsform der erfindungsgemäss verwendeten Umhüllungsmasse ist die Komponente (a) ein Polyglycidylether auf Basis eines Cresolnovolaks und/oder das Vernetzungsmittel (b) entweder Dicyandiamid alleine oder ein Gemisch aus Dicyandiamid und Polyphenolen, wobei es sich bei den Polyphenolen, insbesondere um Phenolnovolake, Cresolnovolake oder Gemische aus den genannten Novolaken handelt.

Die Herstellung und Homogenisierung der erfindungsgemäss eingesetzten härtbaren Zusammensetzungen kann z. B. in üblicher Weise mit Hilfe bekannter Mischaggregate, wie Kugelmühle, Kokneter, Walzenstuhl oder Extruder, gegebenenfalls unter Schmelzen der Zusammensetzungen, wenn notwendig gefolgt von einer Zerkleinerung des aufgeschmolzenen Materials, erfolgen. Selbstverständlich können auch geeignete Kombinationen der oben genannten Homogenisierungsverfahren zur Anwendung kommen. Genauso ist es beispielsweise möglich, die Komponenten der härtbaren Zusammensetzungen in einem geeigneten Lösungsmittel zu lösen und/oder zu suspendieren und anschliessend das Lösungsmittel zu verdampfen, so dass die homogenisierte Zusammensetzung in fester Form zurückbleibt.

Zur Imprägnierung der Spule wird diese, gegebenenfalls nach vorheriger Anwärmung, in eine Form eingebracht. Danach wird die härtbare Zusammensetzung in die die Spule enthaltende Form eingebracht und darin unter Druck, vorzugsweise bei einem möglichst niedrigen Kavitätendruck, beispielsweise von maximal 100 MPa, während einer Zeit von beispielsweise bis zu maximal 10 min, bevorzugt von weniger als ca. 5 min thermisch ausgehärtet, vorzugsweise bei Temperaturen im Bereich von 140 bis 250°C, insbesondere von 160 bis 200°C, ganz bevorzugt im Bereich von ca. 180°C. Das Zeitdruckprofil beim Füllen und der Maximaldruck ist von der zu imprägnierenden Spule abhängig. Die genannten Parameter können vom Fachmann in einfacher Weise experimentell ermittelt werden.

Bevorzugt wird die Form vor dem Einbringen der härtbaren Zusammensetzung evakuiert und die härtbare Zusammensetzung in die die Spule enthaltende, evakuierte Form eingebracht. Dies gilt besonders für die derzeit gebräuchlichen Kammerwicklungen.

Das erfindungsgemässe lmprägnierungsverfahren ist beispielsweise für die Imprägnierung von Spulenwicklungen mit einer Wicklungsdichte von bis zu 1000 Windungen pro mm², vorzugsweise von bis zu 500 Windungen pro mm², geeignet, wobei für die Wicklungen beispielsweise Draht mit Durchmessern bis hinab zu 20 µm, vorzugsweise bis hinab zu 50 µm, zur Anwendung kommen kann. Die Dicke der gesamten Wicklungen kann hierbei z. B. bis zu 7,5 mm, vorzugsweise bis zu 5 mm betragen. Entsprechende Wicklungen sind z. B. in Zündspulen, Printtransformatoren und Flybacktransformatoren zu finden.

Vorzugsweise arbeitet man bei dem erfindungsgemässen lmprägnierverfahren nach dem Prinzip eines üblichen Press-, Spritzpress- oder Spritzgussverfahrens.

Wird ein Spritzgussverfahren angewandt, wird hierbei wegen der vergleichsweise niedrigen Schmelzviskositäten der erfindungsgemäss eingesetzten härtbaren Zusammensetzungen vorzugsweise eine Zylindergarnitur verwendet wird, deren Spritzdüse verschliessbar ist, so dass die Düse beispielsweise bei offener Form verschlossen werden kann. Ebenso kann hierbei die Verwendung einer Schnecke von Vorteil sein, die eine Rückstromsperre aufweist.

### Beispiele:

Fig. 1 zeigt eine schematische Darstellung des Presswerkzeugs, mit dem die Testspulen in den nachfolgenden Beispielen imprägniert werden.

Fig. 2 zeigt einen Längsschnitt durch den in den Beispielen verwendete Spulenkörper und dessen Abmessungen.

### Allgemeine Vorschrift zur Herstellung von Imprägnierungsmassen

Glasfasern und/oder Füllstoffe werden mit einem Silanhaftvermittler versetzt und 30 Minuten lang mit einer Kugelmühle vemahlen. Wird ein Zähigkeitsvermittler verwendet, wird dieser in der benötigten Menge danach ebenfalls in einer Kugelmühle 20 Minuten mit dem Füllstoff vermahlen. Schliesslich werden alle Komponenten der härtbaren Zusammensetzungen, mit Ausnahme der Glasfasern, in einer Kugelmühle ca. 4,25 Stunden lang vermahlen. Danach werden die Glasfasern zugegeben und es wird noch einmal 45 Minuten gemahlen. Die so erhaltenen Pulver werden schliesslich mit einem Huttverdichter zu einem Granulat verarbeitet.

Zur Herstellung der in den Beispielen genannten lmprägnierungsmassen kommen die nachfolgend charakterisierten Füllstoffe, Verstärkungsmaterialien und Additive zum Einsatz:

| Handelsname | Chemische Zusammensetzung |
|---|---|
| NYAD®200 | Natürlicher Wollastonit (200 mesh Grad) |
| NYAD®325 | Natürlicher Wollastonit (325 mesh Grad) |
| OMYA®BSH OMYA®BSH | Natürliches, oberflächenbeschichtetes Calciumcarbonatpulver (Korngrössenverteilung 0,1 - 20 µm; D₅₀ = 2,4 µm) |
| Milled Glas®737BD (Owens Corning) | Gemahlene Glasfasern (mittlere Länge = 225 µm, ⌀ = 15 - 16 um) |
| Albidur®EP 2240 | Siloxanmodifiziertes Bisphenol-A-Epoxidharz |
| Hoechst OP®-Wachs 125U | teilverseiftes Montanwachs |
| Hoechst KSL®-Wachs | Montanwachs |
| Silan A 187® | Silanhaftvermittler |
| Printex V® | Russ |

Die anwendungstechnischen Eigenschaften der lmprägnierungsmassen werden in allen Beispielen, wenn nichts anderes angegeben, mit Hilfe der nachfolgend angegebenen Messmethoden bestimmt:
Tg-Wert: Torsionsschwingversuch gemäss ISO 6721
Biegefestigkeit: ISO 178
Biegemodul: ISO 178
Schlagzähigkeit: ISO 179/1
Lin. therm. Ausdehnungskoeffizient α : DIN 53752 (Temperaturbereich 20 - 80°C)

### Imprägnierung, Bestimmung der Imprägnierungstiefe, Beurteilunq der Imprägniergüte :

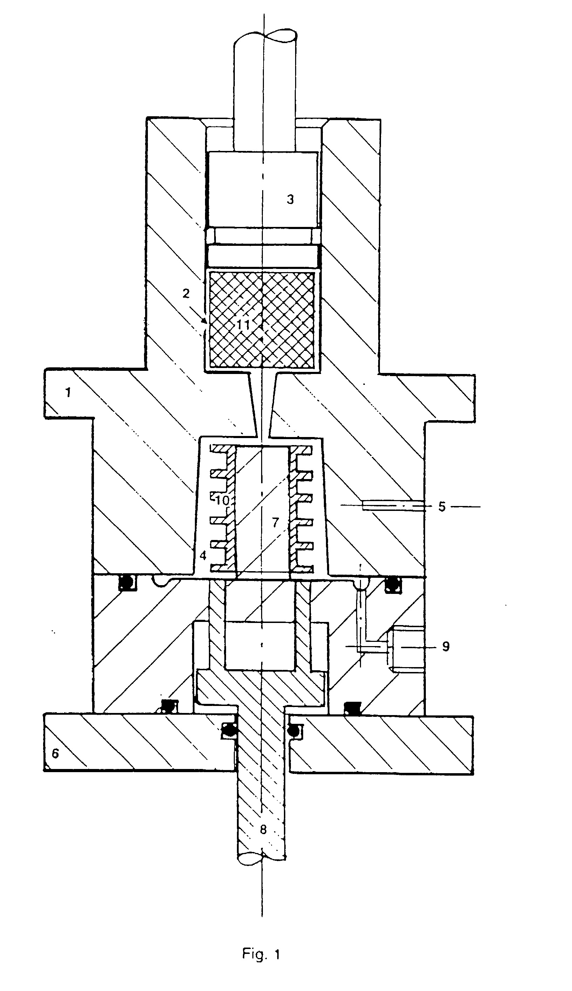

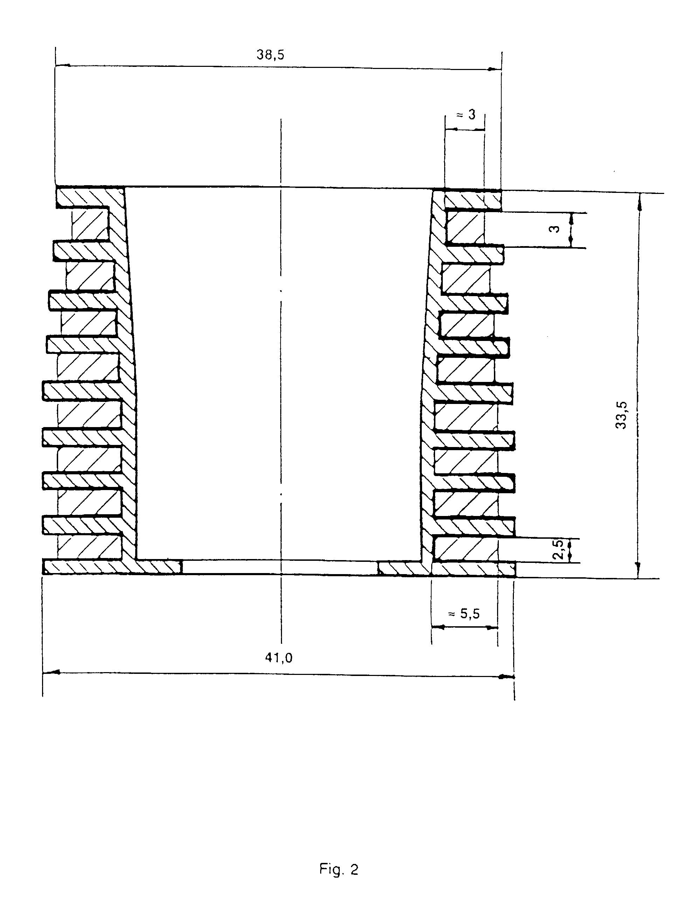

Die Imprägnierung der Testspule erfolgt in allen Beispielen nach dem Prinzip der Spritzpressung (Transferpressen), wobei die in Fig. 1 schematisch dargestellte Testapparatur zur Anwendung kommt. Diese enthält zwei voneinander trennbare Teile (1) und (6). Das erste Teil (1) weist einen Spritzraum (2) zur Aufnahme einer Tablette (11), bestehend aus der erfindungsgemässen Imprägnierzusammensetzung, den Transferkolben (3), die Kavität (4) und eine Bohrung (5) zur Aufnahme eines Temperaturfühler auf. Das zweite Teil (6) enthält einen Kern (7) zur Halterung der zu imprägnierenden Spule (10), eine Vorrichtung (8) zum Entfernen der fertig imprägnierten Spule vom Kern (7) sowie einen Anschluss (9) zur Evakuierung der Kavität (4). Eine auf ca. 110°C vorgewärmte Spule (10) mit den in Fig. 2 angegebenen Abmessungen, die in allen Kammern eine Wicklung aus Kupferdraht eines Durchmessers von 94 µm mit einer Wicklungsdichte von ca. 100 Windungen pro mm² aufweist, wobei die Wicklungsdicke von der obersten Kammer zur untersten Kammer von ca. 3,5 auf ca. 5,5 mm ansteigt, wird in die Kavität (4) des auf 180°C aufgeheizten Imprägnierwerkzeugs (1,6) eingebracht. Die granulafförmige Imprägnierzusammensetzung wird kalt zu einer Tablette verpresst und anschliessend mit Hilfe eines Hochfrequenzvorwärmgerätes auf ca. 70°C erwärmt. Die so vorgewärmte Tablette (11) wird in den Spritzraum (2) eingebracht und es wird ein Vakuum von ca. 30 mbar an der Kavität angelegt. Danach wird die lmprägniermasse mit Hilfe des Kolbens (3) während eines Zeitraums von ca. 15 s in die Kavität (4) transferiert (Spritzdruck zwischen 80 und 150 bar). Die anschliessende Härtungszeit beträgt 5 min. Danach wird die umhüllte und imprägnierte Spule entformt. Die entnommene Spule wird in Längsrichtung zersägt und poliert. Mit Hilfe eines Mikroskops wird die jeweils erreichte lmprägniertiefe vermessen und die lmprägniergüte optisch beurteilt. Die Imprägnierung gilt hierbei als "Gut", wenn mehr als 95 Prozent des Raumes zwischen den Drahtwindungen einer Wicklung mit der lmprägniermasse gefüllt sind.

### Rissfestigkeit:

Zur Bestimmung der Rissfestigkeit wird ein Probekörper hergestellt, indem man ein scharfkantiges, rechteckiges 60 mm langes, 30 mm breites und 4 mm dickes Metallplättchen mit der jeweiligen lmprägnierungsmasse umhüllt, wobei an den vier Ecken des Metallplättchens jeweils ein Bereich von ca. 8 mm mal 8 mm freigelassen wird, und die Masse bei 170°C bis 180°C ausgehärtet. Die Dicke der Umhüllung beträgt ca. 3 mm in Richtung der Längs- und der Breitseite des Metallblättchens und ca. 2 mm senkrecht hierzu. Der Probekörper wird nach dem Entformen der in der nachfolgenden Tabelle angegebenen Abfolge von Behandlungsschritten unterzogen und nach jedem Behandlungsschritt auf eine Rissbildung in der Umhüllungsmasse hin untersucht. Die Rissbildungsklasse entspricht dem letzten Behandlungsschritt, nach welchem der Probekörper noch keine Rissbildung zeigt.

| Schritt | Keine Rissbildung nach |
|---|---|
| 1 | - |
| 2 | 1-stündigem Liegenlassen bei Raumtemperatur nach Entformung |
| 3 | 4-stündigem Liegenlassen bei Raumtemperatur nach Entformung |
| 4 | 24-stündigem Liegenlassen bei Raumtemperatur nach Entformung |
| 5 | Schritt 4 + Kühlung von Raumtemperatur auf 0°C in Eiswasser, 30 min bei 0°C |
| 6 | Schritt 5 + 30 min bei 100°C, Kühlung auf 0°C in Eiswasser, 30 min bei 0°C |
| 7 | Schritt 6 + Kühlung von Raumtemperatur auf -20°C, 15 min bei -20°C |
| 8 | Schritt 7 + Kühlung von Raumtemperatur auf -40°C, 15 min bei -40°C |
| 9 | Schritt 8 + Kühlung von 100°C auf -40°C, 15 min bei -40°C |
| 10 | Schritt 9 + Kühlung von 100°C auf -60°C, 15 min bei -60°C |

### Beispiel 1:

Gemäss der oben beschriebenen allgemeinen Vorschrift wird 1 Kilogramm einer lmprägnierungsmasse folgender Zusammensetzung hergestellt und untersucht:

| Komponente | Gewichtsprozent |
|---|---|
| Epoxycresolnovolak (Epoxidgehalt 4,3 Äqu./Kg; Schmelzpunkt nach Kofler 79°C) | 19,51 |
| Avancierter Bisphenol-A-diglycidylether (Epoxidgehalt ca. 1,7 Äqu./Kg; Schmelzpunkt nach Kofler 55 - 65°C) | 12,68 |
| Cresolformaldehydharz (Schmelzpunkt 97 - 104°C) | 0,99 |
| Dicyandiamid | 2,7 |
| ZK 191.2-K Brocken (Beschleuniger auf Basis von o-Cresolnovolak und 2-Ethylimidazol; Schmelzpunkt nach Kofler 60 - 70°C) | 0,2 |
| NYAD 200 | 46,79 |
| Milled Glass 737 BD | 15,00 |
| Hoechst OP-Wachs 125U | 1,7 |
| Silan A 187 | 0,23 |
| Printex V | 0,2 |

Die lmprägnierungsmasse hat die folgenden Eigenschaften:

| Eigenschaft | |
|---|---|
| lmprägnierungstiefe [mm] | 3,5 |
| lmprägnierungsgüte | gut |
| Tg [°C] | 170 |
| Biegefestigkeit [MPa] | 110 |
| Biegemodul [MPa] | 14600 |
| Schlagzähigkeit [kJ/m²] | 6 |
| Rissfestigkeit | 7 |
| Lin. therm. Ausdehnungskoeffizient α [K⁻¹] | 33.10⁻⁶ |

### Beispiel 2:

Gemäss der oben beschriebenen allgemeinen Vorschrift wird 1 Kilogramm einer weiteren lmprägnierungsmasse mit folgender Zusammensetzung hergestellt:

| Komponente | Gewichtsprozent |
|---|---|
| Epoxycresolnovolak (Epoxidgehalt 4,3 Äqu./Kg; Schmelzpunkt nach Kofler 79°C) | 33,0 |
| Dicyandiamid | 4,0 |
| ZK 191.2-K Brocken(Beschleuniger auf Basis von o-Cresolnovolak und 2-Ethylimidazol; Schmelzpunkt nach Kofler 60 - 70°C) | 0,2 |
| NYAD 200 | 43,9 |
| Milled Glass 737 BD | 15,0 |
| Albidur EP 2240 | 2,0 |
| Hoechst KSL-Wachs | 1,7 |
| Silan A 187 | 0,2 |

Diese lmprägnierungsmasse hat die folgenden Eigenschaften:

| Eigenschaft | |
|---|---|
| lmprägnierungstiefe [mm] | 5,5 |
| lmprägnierungsgüte | gut |
| Tg [°C] | ≈200 |
| Biegefestigkeit [MPa] | 135 |
| Biegemodul [MPa] | 11600 |
| Schlagzähigkeit [kJ/m²] | 7 |
| Lin. therm. Ausdehnungskoeffizient α [K⁻¹] | 33.10⁻⁶ |

### Beispiel 3:

Gemäss der oben beschriebenen Vorschrift wird 1 Kilogramm einer lmprägnierungsmasse mit folgender Zusammensetzung hergestellt:

| Komponente | Gewichtsprozent |
|---|---|
| Avancierter Bisphenol-A-diglycidylether (Epoxidgehalt ca. 1,7 Äqu./Kg; Schmelzpunkt nach Kofler 55 - 65°C) | 31,7 |
| Phthalsäureanhydrid | 5,2 |
| BCl₃N(CH₃)₃-Komplex | 0,3 |
| NYAD 325 | 40,4 |
| OMYA BSH | 19,0 |
| Albidur EP 2240 | 2,0 |
| Hoechst KSL-Wachs | 1,4 |

Diese lmprägnierungsmasse hat die folgenden Eigenschaften:

| Eigenschaft | |
|---|---|
| lmprägnierungstiefe [mm] | 5,5 |
| lmprägnierungsgüte | gut |
| Tg [°C] | ≈120 |

Eine vollständige Imprägnierung von guter lmprägnierungsgüte wird mit den in den obigen Beispielen genannten lmprägnierungsmassen auch erreicht, wenn man anstatt der in den Beispielen imprägnierten Testwicklung (Test) beispielsweise die in der folgenden Tabelle angeführten Wicklungen A, B und C imprägniert:

| Wicklung | Drahtdurchmesser [µm] | Wicklungsdichte [1/mm²] | Wicklungsdicke [mm] |
|---|---|---|---|
| Test | 94 | 100 | 3.5 - 5.5 |
| A | 61 | 180 | 0.95 |
| B | 40 | 465 | 3.5 |
| C | 65 | 254 | 3 |

### Beispiel 4:

Gemäss der oben beschriebenen allgemeinen Vorschrift wird 1 Kilogramm einer lmprägnierungsmasse folgender Zusammensetzung hergestellt und untersucht:

| Komponente | Gewichtsprozent |
|---|---|
| Epoxycresolnovolak (Epoxidgehalt 4,3 Äqu./Kg; Schmelzpunkt nach Kofler 79°C) | 19,50 |
| Avancierter Bisphenol-A-diglycidylether (Epoxidgehalt ca. 1,7 Äqu./Kg; Schmelzpunkt nach Kofler 55 - 65°C) | 12,68 |
| Cresolformaldehydharz (Schmelzpunkt 97 - 104°C) | 1,00 |
| Dicyandiamid | 2,7 |
| Hexamethylentetramin | 0,2 |
| NYAD 200 | 46,79 |
| Milled Glass 737 BD | 15,00 |
| Hoechst OP-Wachs 125U | 1,7 |
| Silan A 187 | 0,23 |
| Printex V | 0,2 |

Die lmprägnierungsmasse hat die folgenden Eigenschaften:

| Eigenschaft | |
|---|---|
| lmprägnierungsgüte | gut |
| Tg [°C] | 160 |
| Biegefestigkeit [MPa] | 130 |
| Biegemodul [MPa] | 13500 |
| Schlagzähigkeit [kJ/m²] | 7,5 |
| Lin. Therm. Ausdehnungskoeffizient α [K⁻¹] | 31.10⁻⁶ |

## Patentansprüche

1. Verfahren zur Imprägnierung einer elektrischen Spule, die eine Wicklung aus mehreren Lagen bestehend aus mehr als einer Windung eines elektrisch leitenden drahfförmigen Materials umfasst, mit einem Kunststoffmaterial, das die einzelen Windungen des drahtförmigen Materials elektrisch voneinander isoliert, mit Hilfe einer thermisch härtbaren Epoxidharzzusammensetzung, dadurch gekennzeichnet, dass diese Zusammensetzung bei Raumtemperatur fest ist und die nachfolgend genannten Bestandteile enthält:
(a) ein bei Raumtemperatur festes Epoxidharz, ausgewählt aus
(a1) Polyglycidylethern auf Basis von Novolaken;
(a2) Diglycidylethern auf Basis von Bisphenolen und
(a3) Gemischen von mehr als einer der Komponenten (a1) und (a2);
(b) ein Vernetzungsmittel für die Komponente (a);
(c) einen geeigneten Beschleuniger für die Reaktion der Komponente (a) und der Komponente (b);
(d) 15 bis 70 Gewichtsprozent, bezogen auf das Gesamtgewicht der Zusammensetzung, Füllstoff, ausgewählt aus
(d1) Calciumcarbonat,
(d2) Quarzmehl,
(d3) Wollastonit, dessen Teilchen ein mittleres Verhältnis von Länge zu Querschnitt aufweisen, das kleiner als 5:1 ist;
(d4) Gemischen der Komponenten (d1), (d2) und (d3) sowie
(d5) Gemischen der Komponenten (d1), (d2), (d3) und (d4) mit anderen anorganischen Füllstoffen.

2. Verfahren nach Anspruch 1, wobei die Zusammensetzung weiterhin enthält:
(e) 10 bis 60 Gewichtsprozent, bezogen auf das Gesamtgewicht der Zusammensetzung, anorganische Verstärkungsmittel in Form von nadel- oder faserförmigen Teilchen mit einer Länge von 0,05 bis 2,5 mm, die ein mittleres Verhältnis von Länge zu Querschnitt von 5 :1 und mehr aufweisen,
wobei die Gesamtmenge der Komponente (d) und (e) maximal 80 Gewichtsprozent, bezogen auf das Gesamtgewicht der Zusammensetzung, beträgt.

3. Verfahren nach Anspruch 2, wobei das Verstärkungsmittel (e) aus nadel- oder faserförmigen Teilchen mit einer Länge von 0,15 bis 2,5 mm besteht.

4. Verfahren nach einem der Ansprüche 2 oder 3, wobei das Verstärkungsmittel (e) ein Glasfasermaterial ist.

5. Verfahren nach einem der Ansprüche 1 bis 4, wobei die Komponente
(a1) ausgewählt ist aus:
(a1.1) Polyglycidylethern auf Basis von Epoxyphenolnovolaken,
(a1.2) Polyglycidylethern auf Basis von Epoxycresolnovolaken und
(a1.3) Gemischen von Komponenten (a1.1) und (a1.2).

6. Verfahren nach einem der Ansprüche 1 bis 5, wobei die Komponente (a2) ein Diglycidylether auf Basis von Bisphenol A ist.

7. Verfahren nach einem der Ansprüche 1 bis 6, wobei das Vernetzungsmittel
(b) ausgewählt ist aus:
(b1) Dicyandiamid,
(b2) Polycarbonsäureanhydriden und
(b3) Gemischen aus mehr als einer der Komponenten (b1) und/oder (b2) und/oder einem oder mehreren Polyphenolen.

8. Verfahren nach Anspruch 7, wobei die Polyphenole ausgewählt sind aus:
Phenolnovolaken,
Cresolnovolaken und
Gemischen von derartigen Novolaken.

9. Verfahren nach einem der Ansprüche 1 bis 8, wobei der Füllstoff Wollastonit ist.

10. Verfahren nach Anspruch 9, wobei die Zusammensetzung weiterhin
(f) einen Zähigkeitsvermittler enthält.

11. Verfahren nach Anspruch 10, wobei der Zähigkeitsvermittler
(f) ausgewählt ist aus:
(f1) mit Polysiloxanen modifizierten Epoxidharzen und
(f2) Blockcopolymeren auf Basis von Polydimethylsiloxanen und Caprolacton oder Polycaprolactonen.

12. Verfahren nach Anspruch 11, wobei der Zähigkeitsvermittler (f1) ein mit Polysiloxanen modifizierter Diglycidylether auf Basis von Bisphenol A ist.

13. Verfahren nach einem der Ansprüche 1 bis 4 oder 6 bis 12, wobei die Zusammensetzung als Komponenten (a), (b) und (c) die nachfolgend genannten Bestandteile enthält:
(a2) einen oder mehrere Diglycidylether auf Basis von Bisphenolen;
(b2) eines oder mehrere Polycarbonsäureanhydride;
(c) einen geeigneten Beschleuniger für die Reaktion der Komponente (a2) und der Komponente (b2).

14. Verfahren nach einem der Ansprüche 1 bis 5 oder 7 bis 12, wobei die Zusammensetzung als Komponenten (a), (b) und (c) die nachfolgend genannten Bestandteile enthält:
(a) ein bei Raumtemperatur festes Epoxidharz, ausgewählt aus
(a1) einen oder mehrere Polyglycidylether auf Basis von Novolaken;
(a2) Diglycidylethern auf Basis von Bisphenolen und insbesondere
(a3) Gemischen von mehr als einer der Komponenten (a1) und (a2);
(b) ein Vernetzungsmittel ausgewählt aus
(b1) Dicyandiamid und
(b4) Gemischen von Dicyandiamid und Polyphenolen; und
(c) einen geeigneten Beschleuniger für die Reaktion der Komponente (a) und der gewählten Komponente (b1) oder (b4), insbesondere Hexamethylentetramin.

15. Verfahren nach Anspruch 14, wobei die Komponente (a) ein Polyglycidylether auf Basis eines Cresolnovolaks ist.

16. Verfahren nach einem der Ansprüche 14 und 15, wobei das Vernetzungsmittel (b) Dicyandiamid ist.

17. Verfahren nach einem der Ansprüche 14 und 15, wobei das Vernetzungsmittel (b) ein Gemisch aus Dicyandiamid und Polyphenolen ist und die Polyphenole ausgewählt sind aus
Phenolnovolaken,
Cresolnovolaken und
Gemischen von derartigen Novolaken.

18. Verfahren nach einem der Ansprüche 1 bis 17, wobei die Zusammensetzung weiterhin
(g) ein Formtrennmittel enthält.

19. Verfahren nach einem der Ansprüche 1 bis 18, wobei die Spule in eine Form eingebracht wird und danach die härtbare Zusammensetzung in die die Spule enthaltende Form eingebracht und darin unter Druck thermisch ausgehärtet wird.

20. Verfahren nach Anspruch 19, wobei die Form vor dem Einbringen der härtbaren Zusammensetzung evakuiert wird und die härtbare Zusammensetzung in die die Spule enthaltende, evakuierte Form eingebracht wird.

21. Verfahren nach einem der Ansprüche 1 bis 20 nach dem Prinzip des Press-, Spritzpress- oder Spritzgussverfahrens.

22. Spritzgussverfahren nach Anspruch 21, wobei eine Zylindergarnitur verwendet wird, deren Spritzdüse verschliessbar ist.

23. Spritzgussverfahren nach einem der Ansprüche 20 oder 21, wobei eine Schnecke verwendet wird, die eine Rückstromsperre aufweist.

24. Härtbare Epoxidharzzusammensetzung, insbesondere zur Verwendung in einem Verfahren nach einem der Ansprüche 2 bis 23, die bei Raumtemperatur fest ist und die die nachfolgend genannten Bestandteile enthält:
(a) ein bei Raumtemperatur festes Epoxidharz, ausgewählt aus
(a1) Polyglycidylethern auf Basis von Novolaken;
(a2) Diglycidylethern auf Basis von Bisphenolen und
(a3) Gemischen von mehr als einer der Komponenten (a1) und (a2);
(b) ein Vernetzungsmittel für die Komponente (a);
(c) einen geeigneten Beschleuniger für die Reaktion der Komponente (a) und der Komponente (b);
(d) 15 bis 70 Gewichtsprozent, bezogen auf das Gesamtgewicht der Zusammensetzung, Füllstoff, ausgewählt aus
(d1) Calciumcarbonat,
(d2) Quarzmehl,
(d3) Wollastonit, dessen Teilchen ein mittleres Verhältnis von Länge zu Querschnitt aufweisen, das kleiner als 5 :1 ist;
(d4) Gemischen der Komponenten (d1), (d2) und (d3) sowie
(d5) Gemischen der Komponenten (d1), (d2), (d3) und (d4) mit anderen anorganischen Füllstoffen; sowie
(e) 10 bis 60 Gewichtsprozent, bezogen auf das Gesamtgewicht der Zusammensetzung, anorganische Verstärkungsmittel in Form von nadel- oder faserförmigen Teilchen mit einer Länge von mehr als 0,15 bis 2,5 mm, die ein mittleres Verhältnis von Länge zu Querschnitt von 5 :1 und mehr aufweisen,
wobei die Gesamtmenge der Komponente (d) und (e) maximal 80 Gewichtsprozent, bezogen auf das Gesamtgewicht der Zusammensetzung, beträgt.

25. Zusammensetzung nach Anspruch 24, wobei das Verstärkungsmittel (e) ein Glasfasermaterial ist.

26. Zusammensetzung nach einem der Ansprüche 24 oder 25, wobei die Komponente
(a1) ausgewählt ist aus
(a1.1) Polyglycidylethern auf Basis von Epoxyphenolnovolaken,
(a1.2) Polyglycidylethern auf Basis von Epoxycresolnovolaken und
(a1.3) Gemischen von Komponenten (a1.1) und (a1.2).

27. Zusammensetzung nach einem der Ansprüche 24 bis 25, wobei die Komponente (a2) ein Diglycidylether auf Basis von Bisphenol A ist.

28. Zusammensetzung nach einem der Ansprüche 24 bis 27, wobei das Vernetzungsmittel
(b) ausgewählt ist aus
(b1) Dicyandiamid,
(b2) Polycarbonsäureanhydriden und
(b3) Gemischen aus mehr als einer der Komponenten (b1) und/oder (b2) und/oder einem oder mehreren Polyphenolen.

29. Zusammensetzung nach Anspruch 28, wobei die Polyphenole ausgewählt sind aus
Phenolnovolaken,
Cresolnovolaken und
Gemischen von derartigen Novolaken.

30. Zusammensetzung nach einem der Ansprüche 25 bis 29, die weiterhin
(f) einen Zähigkeitsvermittler umfasst.

31. Zusammensetzung nach Anspruch 30, wobei der Zähigkeitsvermittler
(f) ausgewählt ist aus
(f1) mit Polysiloxanen modifizierten Epoxidharzen und
(f2) Blockcopolymeren auf Basis von Polydimethylsiloxanen und Caprolacton oder Polycaprolactonen.

32. Zusammensetzung nach Anspruch 31, wobei der Zähigkeitsvermittler (f1) ein mit Polysiloxanen modifizierter Diglycidylether auf Basis von Bisphenol A ist.

33. Zusammensetzung nach einem der Ansprüche 24 bis 31, die weiterhin
(g) ein Formtrennmittel enthält.

34. Zusammensetzung nach einem der Ansprüche 24 oder 25 oder nach einem der Ansprüche 27 bis 33, wobei die Zusammensetzung als Komponenten (a), (b) und (c) die nachfolgend genannten Bestandteile enthält:
(a2) einen oder mehrere Diglycidylether auf Basis von Bisphenolen;
(b2) eines oder mehrere Polycarbonsäureanhydride;
(c) einen geeigneten Beschleuniger für die Reaktion der Komponente (a2) und der Komponente (b2).

35. Zusammensetzung nach einem der Ansprüche 24 bis 26 oder einem der Ansprüche 28 bis 33, wobei die Zusammensetzung als Komponenten (a), (b) und (c) die nachfolgend genannten Bestandteile enthält:
(a) ein bei Raumtemperatur festes Epoxidharz, ausgewählt aus
(a1) einen oder mehrere Polyglycidylether auf Basis von Novolaken;
(a2) Diglycidylethern auf Basis von Bisphenolen und insbesondere
(a3) Gemischen von mehr als einer der Komponenten (a1) und (a2);
(b) ein Vernetzungsmittel ausgewählt aus
(b1) Dicyandiamid und
(b4) Gemischen von Dicyandiamid und Polyphenolen; und
(c) einen geeigneten Beschleuniger für die Reaktion der Komponente (a) und der gewählten Komponente (b1) oder (b4), insbesondere Hexamethylentetramin.

36. Zusammensetzung nach Anspruch 35, wobei die Komponente (a) ein Polyglycidylether auf Basis eines Cresolnovolaks ist.

37. Zusammensetzung nach einem der Ansprüche 35 oder 36, wobei das Vernetzungsmittel (b) Dicyandiamid ist.

38. Zusammensetzung nach einem der Ansprüche 35 oder 36, wobei das Vernetzungsmittel (b) ein Gemisch aus Dicyandiamid und Polyphenolen ist und die Polyphenole ausgewählt sind aus
Phenolnovolaken,
Cresolnovolaken und
Gemischen von derartiger Novolake.
